# EUROPEAN PATENT SPECIFICATION

(11) **EP 2 520 450 B1**
(45) Date of publication and mention of the grant of the patent: **03.04.2019**
(21) Application number: 10840877.4
(22) Date of filing: 15.12.2010
(51) Int. Cl.: B60J 1/20

(54) **WINDOW SHADE DEVICE FOR VEHICLES**
FENSTERBLENDENVORRICHTUNG FÜR FAHRZEUGE
DISPOSITIF DE STORE DE FENÊTRE POUR VÉHICULE

(30) Priority: 28.12.2009 JP 2009296842
(43) Date of publication of application: 07.11.2012
(73) Proprietor: Ashimori Industry Co., Ltd., Osaka-shi Osaka 550-0014 (JP)
(72) Inventor: OJIMA Shinya, Settsu-shi Osaka 566-0001 (JP)
(74) Representative: Kilian Kilian & Partner
(86) International application number: PCT/JP2010/072536
(87) International publication number: WO 2011/081019

(56) References cited:
- EP-A1- 1 306 251
- EP-A1- 1 886 857
- EP-A2- 0 146 678
- DE-U1- 29 921 859
- JP-A- 2005 145 444
- JP-A- 2006 036 190
- JP-A- 2006 327 273
- JP-A- 2007 320 461
- JP-A- 2008 037 392
- US-A- 4 607 676
- US-A- 5 515 898

## Description

### Technical Field

The present invention relates to a window shade device for vehicles that covers a window of a vehicle in a manner of allowing the window to be shielded and closed.

### Background Art

Conventionally, Patent Document 1 discloses the window shade device of this type.

In Patent Document 1, a window shade sheet wound around a winding shaft is drawn by a contour maintaining member. The contour maintaining member is pivotally connected to a slide element guided by a guide rail. The configuration is made such that the contour maintaining member is pressed by a pressure spring at the end of a drawing path, whereby the window shade sheet is drawn by an amount larger than its moving distance.

In Patent Document 2, a double window shade arrangement for a divided window of a motor vehicle includes two separate winding shafts that are arranged on the window at arbitrary angles relative to one another. Window shade strips assigned to the respective winding shafts are moved in at least one direction with the aid of a common driving motor. For this purpose, the electric motor can be coupled to the free edges of the window shade strips or directly coupled to the winding shafts.

### Prior Art Document

### Patent Document

Patent Document 1: Japanese Patent Application Laid-Open No. 2005-145444
Patent Document 2: European patent application publication EP 1 306 251 A1

### Summary of the Invention

### Problem to be Solved by the Invention

Unfortunately, in Patent Document 1, the pressure spring presses the contour maintaining member from one direction at the end of the drawing path, and accordingly, the contour maintaining member swings around the part connected to the slide element in the state in which the window shade sheet is drawn. This may allow the window shade to be slightly opened or rattle.

Therefore, an object of the present invention is to stably maintain a shade in an open state.

The object is achieved by the subject matter of the independent claim. Further advantageous embodiments are the subject matter of the dependent claims.

### Means to Solve the Problem

In order to solve the above-mentioned problem, a first aspect relates to a window shade device for vehicles that covers a window of a vehicle for allowing the window to be shielded and opened, which includes: a window shade configured to shield the window; a windup device winding up the window shade in a manner of being drawn therefrom and housed therein; a guide and support mechanism including a guide path along a drawing/housing direction of the window shade and a movable member supported so as to move along the guide path; and an arm including one end serving as a shade connecting portion connected to a drawing-side edge of the window shade and the other end rotatively supported by the movable member, the arm being configured to change a position thereof between a first position in which the shade connecting portion is located on the housing direction side of the window shade and a second position in which the shade connecting portion is located on the drawing direction side of the window shade, wherein a first gear is provided on a side opposite to the shade connecting portion in the arm, with a support portion for the movable member being sandwiched therebetween, the window shade device for vehicles further including a second gear configured to change the position of the arm from the first position to the second position by meshing with the first gear in a path in which the movable member reaches the drawing-direction edge of the window along the guide path from the middle of the process where the movable member is directed toward the drawing-direction edge of the window shade.

According to a second aspect, in the window shade device for vehicles
according to the first aspect: the first gear is an arc gear located approximately around the support portion for the movable member in the arm; and the second gear is rack teeth provided on the drawing-direction edge side of the window shade in the guide path and extending along the guide path.

According to a third aspect, the window shade device for vehicles according to the first or second aspect further includes: a linear rack tooth member connected to the movable member and disposed so as to move along the guide path; and a drive mechanism meshing with rack teeth of the linear rack tooth member and driving the linear rack tooth member to reciprocate along a longitudinal direction thereof.

According to a fourth aspect, in the window shade device for vehicles according to any one of the first to third aspects, the windup device is configured to draw therefrom and house therein the window shade along an approximately horizontal direction; and the window shade device for vehicles further includes the linear rack tooth member connected to the movable member and disposed so as to move along the guide path, the window shade device for vehicles further including: a vertically shielding window shade configured to shield another window provided next to the window; a vertically shielding windup device winding up the vertically shielding window shade in a manner of being drawn therefrom and housed therein along an approximately vertical direction; a vertically shielding open/close mechanism drawing and housing the vertically shielding window shade by selectively pulling both end sides of a driving wire extending from a vertically shielding movable member configured to move along a drawing/housing direction of the vertically shielding window shade; and a common drive mechanism including: a pulley body around which the driving wire is wound so as to selectively pull the both end sides of the driving wire for driving; a gear body configured to mesh with the rack teeth of the linear rack tooth member; and a rotary drive member rotatively driving the pulley body and the gear body.

A fifth aspect (not claimed) relates to a window shade device for vehicles that is provided next to a vehicle and covers a first window and a second window for allowing the windows to be shield and opened, which includes: a vertically shielding window shade configured to shield the first window; a vertically shielding windup device winding up the vertically shielding window shade in a manner of being drawn therefrom and housed therein along an approximately vertical direction; a vertically shielding open/close mechanism drawing and housing the vertically shielding window shade by selectively pulling both end sides of a driving wire extending from a vertically shielding movable member configured to move along a drawing/housing direction of the vertically shielding window shade; a horizontally shielding window shade configured to shield the second window; a horizontally shielding windup device winding up the horizontally shielding window shade in a manner of being drawn therefrom and housed therein along an approximately horizontal direction; a horizontally shielding open/close mechanism drawing and housing the horizontally shielding window shade by causing a linear rack tooth member to reciprocate along a longitudinal direction thereof, the linear rack tooth member being connected to a horizontally shielding movable member configured to move along a drawing/housing direction of the horizontally shielding window shade; and a common drive mechanism including: a pulley body around which the driving wire is wound so as to selectively pull the both end sides of the driving wire for driving; a gear body configured to mesh with rack teeth of the linear rack tooth member; and a rotary drive member rotatively driving the pulley body and the gear body.

### Effects of the Invention

According to the first aspect, the second gear meshes with the first gear to change the position of the arm from the first position to the second position in the path in which the movable member reaches the drawing-direction edge of the window shade from the middle of the process where the movable member is directed toward the drawing-direction edge of the window shade along the guide path, and thus the window shade can be drawn by an amount equal to or larger than the moving distance of the movable member. In the state in which the movable member is drawn, the second gear and the first gear are maintained in the state of meshing with each other, which suppresses the arm from swinging. This enables to stably maintain the window shade in an open state.

According to the second aspect, in the state in which the movable member is moved to the drawing-direction edge, the arc gear being the first gear and the rack teeth being the second gear can mesh with each other in a stable manner.

According to the third aspect, the movable member can be moved by the linear rack tooth member disposed along the guide path. This enables to make the guide and support mechanism compact.

According to the fourth aspect, the window shade whose drawing/housing direction is approximately horizontal can be made compact through driving with the use of the linear rack tooth member. Meanwhile, the vertically shielding window shade whose drawing/housing direction is approximately vertical can be driven by a relatively strong force using the driving wire. Further, the overall configuration can be made compact by driving the linear rack tooth member and the driving wire by the common drive mechanism.

According to the fifth aspect, which is not claimed, the horizontally shielding window shade whose drawing/housing direction is approximately horizontal can be made compact through driving using the linear rack tooth member. Meanwhile, the vertically shielding window shade whose drawing/housing direction is approximately vertical can be driven by a
relatively strong force using the driving wire. Further, the overall configuration can be made compact by driving the linear rack tooth member and the driving wire by the common drive mechanism.

### Brief Description of Drawings

FIG. 1 is a side view showing a window shade device for vehicles according to an embodiment.
FIG. 2 is a side view showing the window shade device for vehicles in a housed state.
FIG. 3 is an enlarged cross-sectional view of a main portion of a vertically shielding guide rail.
FIG. 4 is a side view showing a horizontally shielding window shade mechanism.
FIG. 5 is a view illustrating the action of the horizontally shielding window shade mechanism.
FIG. 6 is a view illustrating the action of the horizontally shielding window shade mechanism.
FIG. 7 is a view illustrating the action of the horizontally shielding window shade mechanism.
FIG. 8 is a side view of a main portion showing a common drive mechanism.
FIG. 9 is a perspective view of the main portion showing the common drive mechanism.
FIG. 10 is a view illustrating an internal structure of the common drive mechanism.

### Embodiment for Carrying Out the Invention

### <Overall configuration>

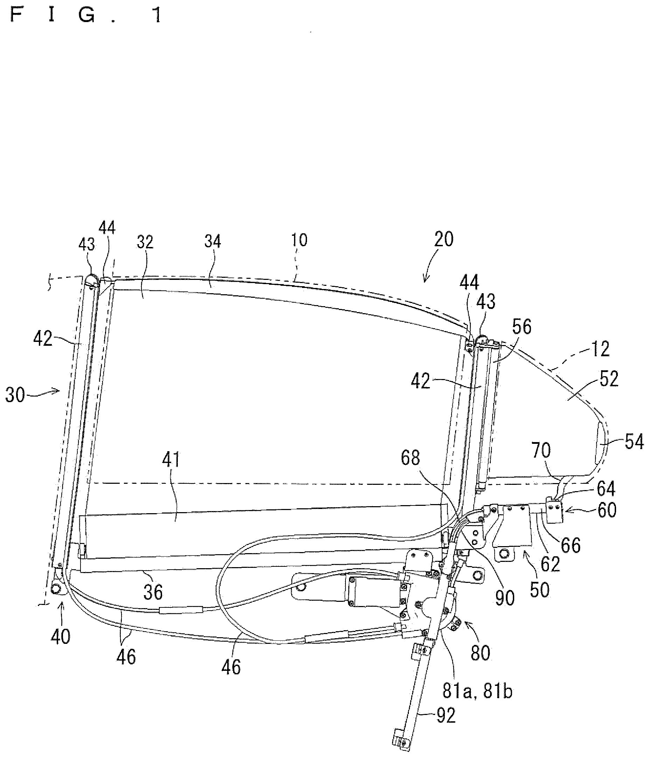

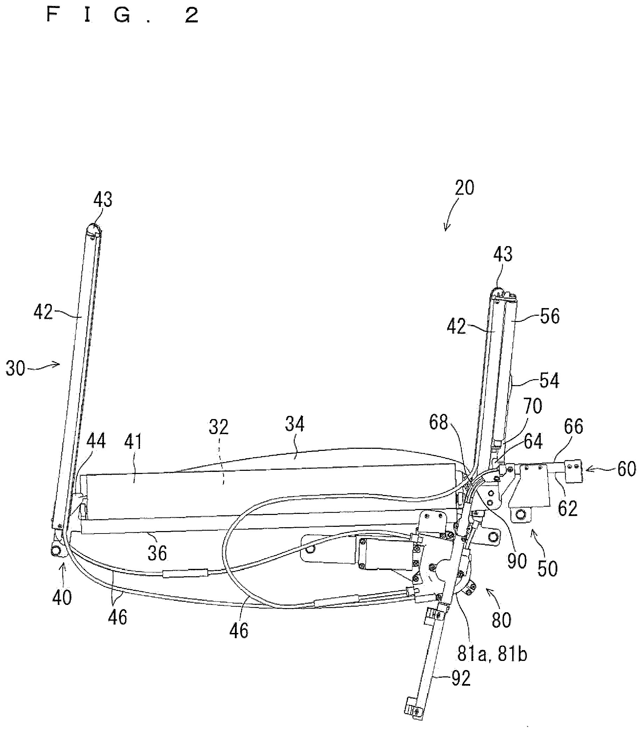

A window shade device for vehicles according to an embodiment is described below. FIG. 1 is a side view showing a window shade device for vehicles 20 in a drawn state, and FIG. 2 is a side view showing the window shade device for vehicles 20 in a housed state. Note that FIG. 1 and FIG. 2 show the state viewed from an inner side of a vehicle.

The window shade device for vehicles 20 is installed in adjacent windows 10 and 12 and covers the windows 10 and 12 from an inner side of a car room for allowing the windows to be shielded and opened. In this case, the window shade device for vehicles 20 is installed in the rear side window 10 (first window) having an approximately square shape and the rear quarter window 12 (second window) that is adjacent to the rear side window 10 toward a back side of the vehicle and has an approximately triangular shape. The window shade device for vehicles 20 is configured so as to cover the rear side window 10 in an approximately vertical drawing/housing direction and cover the rear quarter window 12 in an approximately horizontal drawing/housing direction.

That is, the window shade device for vehicles 20 includes a vertically shielding window shade mechanism 30 for covering the rear side window 10, a horizontally shielding window shade mechanism 50 for covering the rear quarter window 12, and a common drive mechanism 80 for driving those.

### <Vertically shielding window shade mechanism>

The vertically shielding window shade mechanism 30 includes a vertically shielding window shade 32, a vertically shielding windup device 36 and a vertically shielding open/close mechanism 40.

The vertically shielding window shade 32 is formed of fabric, resin sheet or the like into a shape capable of shielding the rear side window 10. Attached to the distal edge of the vertically shielding window shade 32 is a stay 34 that is formed of, for example, a resin and has an approximately rod shape.

The vertically shielding windup device 36 winds up the vertically shielding window shade 32 so as to be drawn therefrom and housed therein almost vertically. That is, the vertically shielding windup device 36 includes a windup shaft capable of winding up the vertically shielding window shade 32, and the windup shaft is biased in the direction in which the vertically shielding window shade 32 is wound up by, for example, a coil spring (not shown). When the stay 34 is pulled, the vertically shielding window shade 32 is drawn from the vertically shielding windup device 36, to thereby cover the rear side window 10. Meanwhile, when the force for pulling the stay 34 is released, the vertically shielding window shade 32 is wound up and housed by the biasing force toward the windup direction of the windup shaft. The vertically shielding windup device 36 is installed in a car body along a lower edge of the rear side window 10 in the state of being mounted onto a horizontal frame 41 described below, which is configured such that the vertically shielding window shade 32 covers the rear side window 10 so as to be drawn and housed approximately vertically.

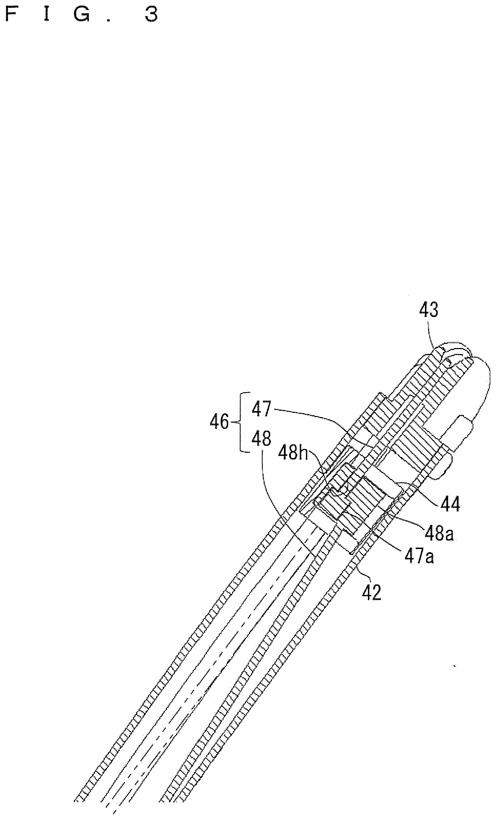

FIG. 3 is an enlarged cross-sectional view of a main portion of a vertically shielding guide rail 42. As shown in FIG. 1 to FIG. 3, the vertically shielding open/close mechanism 40 includes a pair of vertically shielding guide rails 42. The pair of vertically shielding guide rails 42 are each made of metal or the like and are attached to both ends of the horizontal frame 41 so as to be approximately perpendicular to the horizontal frame 41 and extend along approximately the same direction (vertically). The pair of vertically shielding guide rails 42 are installed in pillars of a vehicle along the front-side edge and a back-side edge of the rear side window 10. In this case, the length dimension of the vertically shielding guide rail 42 on the vehicle front side is larger than the length dimension of the vertically shielding guide rail 42 on the vehicle back side. This is because the length dimension of the front-side edge of the rear side window 10 is larger than the length dimension of the back-side edge of the rear side window 10.

The vertically shielding guide rail 42 is formed into an approximately tubular shape (in this case, approximately square tubular shape), and a slit is formed on the surface thereof on the rear side window 10 side. Mounted onto the tip end of the vertically shielding guide rail 42 is a wire bending portion 43, and the proximal end of the vertically shielding guide rail 42 is open.

The vertically shielding guide rail 42 is provided with a vertically shielding movable member 44 movable along the vertically shielding guide rail 42.

The vertically shielding movable member 44 is a member formed of a resin or the like, which is formed into a box shape that is movable along the vertically shielding guide rail 42. The vertically shielding movable member 44 is partially exposed to the outside through the slit of the vertically shielding guide rail 42, and the stay 34 is connected to this exposed portion. The configuration is made such that when the vertically shielding movable member 44 moves along the drawing/housing direction, the stay 34 moves in the same direction, whereby the vertically shielding window shade 32 is drawn and housed.

Further, the vertically shielding guide rail 42 includes driving wires 46 for moving and driving the vertically shielding movable member 44 through pulling. The driving wires 46 are connected to the vertically shielding movable member 44 so as to extend in two directions, which are configured to move the vertically shielding movable member 44 in two directions along the vertically shielding guide rails 42 by selectively pulling both sides of the driving wire 46.

Here, the driving wires 46 include two wires 47 and 48. A large diameter portion 47a is formed at an end of the wire 47, whereas a wire interlocking portion 48a having a hole 48h through which the wire 47 can pass is formed at the end of the wire 48. The two wires 47 and 48 are connected to each other by causing the wire 47 to pass through the hole 48h and interlocking the large diameter portion 47a with the wire interlocking portion 48a. The wires 47 and 48 are configured to be connected to each other in a manner of extending in two directions from the vertically shielding movable member 44 by interlocking the connecting portions between the large diameter portion 47a and the wire interlocking portion 48a with the vertically shielding movable member 44 in a manner of being fitted thereinto. Needless to say, a vertically shielding movable member may be secured to a middle of one wire with a caulking metal fitting, through screwing or the like.

The wire 47 passes through the vertically shielding guide rail 42 to be guided toward a distal end thereof, is bent into an approximately U-shape at the wire bending portion 43, and passes through the vertically shielding guide rail 42 again to be guided toward a proximal end thereof. Meanwhile, the wire 48 passes through the vertically shielding guide rail 42 to be guided toward a proximal end thereof. Both wires 47 and 48 pass through the proximal-end-side opening of the vertically shielding guide rail 42 to be extended outwardly, and are drawn toward the common drive mechanism 80. The wires 47 and 48 are selectively pulled by the common drive mechanism 80, whereby the vertically shielding movable member 44 moves in the drawing direction and the housing direction. In this case, the vertically shielding movable member 44 moves in the drawing direction when the wire 47 is pulled while the wire 48 being drawn out, whereas the vertically shielding movable member 44 moves in the housing direction when the wire 48 is pulled while the wire 47 is being drawn out.

### <Horizontally shielding window shade mechanism>

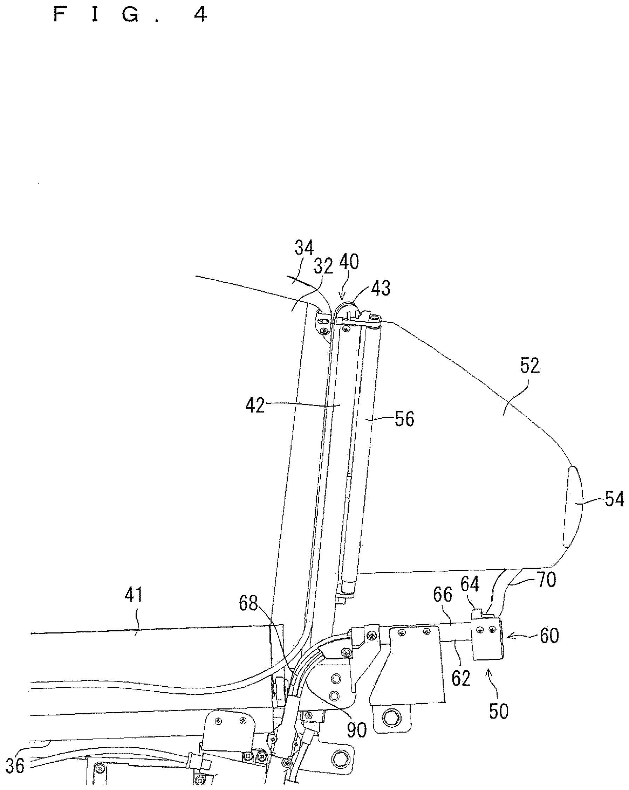

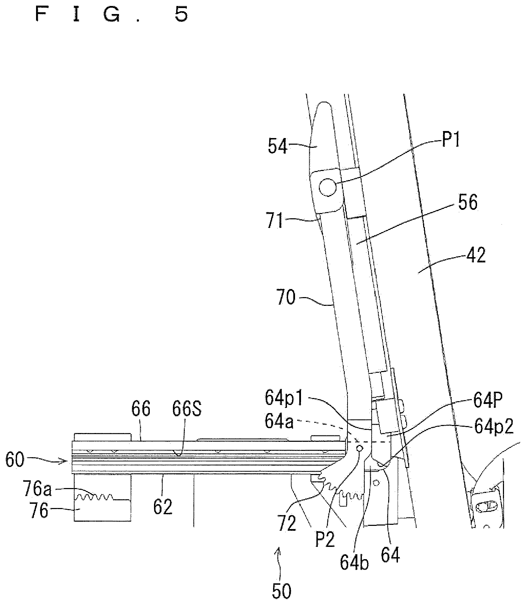

FIG. 4 is a side view showing the horizontally shielding window shade mechanism 50, and FIG. 5 to FIG. 7 are views illustrating the action of the horizontally shielding window shade mechanism 50. Note that FIG. 4 shows the state viewed from an inner side of a car room, and FIG. 5 to FIG. 7 show the state viewed from the outer side thereof (rear quarter window 12 side).

As shown in FIG. 1, FIG. 2 and FIG. 4 to FIG. 7, the horizontally shielding window shade mechanism 50 includes a horizontally shielding window shade 52, a horizontally shielding windup device 56 and a horizontally shielding open/close mechanism 60.

The horizontally shielding window shade 52 is formed of fabric, resin sheet or the like into a shape so as to shield the rear quarter window 12. Here, the horizontally shielding window shade 52 is formed into an approximately triangular shape obtained by rounding a distal edge thereof. Mounted at the distal edge of the horizontally shielding window shade 52 is a quarter stay 54 that is formed of a resin or the like into an approximately rod shape.

The horizontally shielding windup device 56 winds up the horizontally shielding window shade 52 so as to be drawn/housed along an approximately horizontal direction. That is, the horizontally shielding windup device 56 includes a windup shaft capable of winding the horizontally shielding window shade 52, and the windup shaft is biased in the direction in which the horizontally shielding window shade 52 is wound up with, for example, a coil spring (not shown). When the quarter stay 54 is pulled, the horizontally shielding window shade 52 is drawn from the horizontally shielding windup device 56, to thereby cover the rear quarter window 12. Meanwhile, the force for pulling the quarter stay 54 is released, the horizontally shielding window shade 52 is wound up and housed by the biasing force along the windup direction of the windup shaft. The horizontally shielding windup device 56 is mounted and secured to the vertically shielding guide rail 42 on the vehicle back side along the vertically shielding guide rail 42. The horizontally shielding windup device 56 is installed in a pillar on the vehicle front side of the rear quarter window 12 together with the vertically shielding guide rail 42 to be disposed along the front-side edge of the rear quarter window 12. As a result, the horizontally shielding window shade 52 is configured to cover the rear quarter window 12 in a manner of being drawn/housed approximately horizontally.

The horizontally shielding open/close mechanism 60 includes a guide and support mechanism 62 and an arm 70. The horizontally shielding open/close mechanism 60 is configured such that the horizontally shielding window shade 52 is drawn and housed by moving the arm 70 while changing a position thereof by the guide and support mechanism 62.

More specifically, the guide and support mechanism 62 includes a horizontally shielding movable member 64 and a guide rail 66 (guide path).

The guide rail 66 is configured so as to support the horizontally shielding movable member 64 in a movable manner along the drawing/housing direction of the horizontally shielding window shade 52. In this case, the guide rail 66 is formed into an approximately tubular shape (approximately square tubular shape), and a slit 66S extending along the longitudinal direction of the guide rail 66 is formed on one side surface thereof (in this case, surface on the side facing the outside of the car). One end of the guide rail 66 is secured to the proximal end of the vertically shielding guide rail 42 on the back side by means of a bracket or the like. Accordingly, the guide rail 66 is secured in an approximately horizontal position from the proximal end of the vertically shielding guide rail 42. The guide rail 66 is installed in the vehicle together with the vertically shielding guide rail 42 and the like, and is disposed in the portion of the car body which is located below the rear quarter window 12, along the lower edge of the rear quarter window 12.

The horizontally shielding movable member 64 as a movable member is supported to be movable along the drawing/housing direction of the horizontally shielding window shade 52 by the guide rail 66. In this case, the horizontally shielding movable member 64 has a configuration in which a movable main body 64a and an arm support portion 64b are integrated with each other. The movable main body 64a is disposed in the guide rail 66 in a movable manner, and the arm support portion 64b is exposed to the side of the guide rail 66 through the slit 66S. The arm support portion 64b is a portion that supports the arm 70 so as to change a position thereof, and a specific configuration thereof is described below in detail.

The horizontally shielding open/close mechanism 60 includes a linear rack tooth member 68 that is connected to the horizontally shielding movable member 64 and is disposed so as to move along the guide rail 66. The linear rack tooth member 68 is formed of a linear member such as a resin that has flexibility and is not easily bent in a case of being pushed, and a plurality of teeth are formed on one surface thereof such that irregularities continue in a linear manner. One end of the linear rack tooth member 68 is pinched by the horizontally shielding movable member 64 and is connected and secured thereto by the securing structure such as pinching or screwing. Further, the linear rack tooth member 68 passes through the guide rail 66, passes through a proximal-end-side opening thereof and extends outwardly, which is disposed in a movable manner along a longitudinal direction thereof.

The linear rack tooth member 68 is driven by a drive mechanism described below so as to reciprocate along the longitudinal direction thereof, and then the horizontally shielding movable member 64 is moved. As a result, the horizontally shielding window shade 52 is drawn and housed by the arm 70 described below. That is, from another point of view, the horizontally shielding open/close mechanism 60 is configured such that the horizontally shielding window shade 52 can be drawn and housed by causing the linear rack tooth member 68 connected to the horizontally shielding movable member 64 movable along the drawing/housing direction of the horizontally shielding window shade 52 to reciprocate along the longitudinal direction thereof.

The arm 70 is formed of metal, resin or the like into a long shape, in this case, an elongated plate shape. One end of the arm 70 is a shade connecting portion 71 rotatively connected to the quarter stay 54 at the drawing-side edge of the horizontally shielding window shade 52 by means of a pin P1.

The portion near the lower end of the arm 70 in the longitudinal direction is rotatively connected to the arm support portion 64b of the horizontally shielding movable member 64 by means of a pin P2. Formed in the horizontally shielding movable member 64 is a regulating projection 64p that regulates a position change of the arm 70. The regulating projection 64p regulates a position of the shade connecting portion 71 between a first position in which the shade connecting portion 71 is located on the housing direction side of the horizontally shielding window shade 52 and a second position in which the shade connecting portion 71 is located on the drawing direction side of the horizontally shielding window shade 52. In this case, the regulating projection 64p is a projection formed on the housing direction side with respect to the pin P2, and includes a first abutment surface 64p1 that abuts against one side surface of the arm 70 located on the shade connecting portion 71 side with respect to the pin P2 and regulates the shade connecting portion 71 to the first position, and a second abutment surface 64p2 that abuts against one side surface thereof on the side opposite to the first abutment surface 64p1 and regulates the shade connecting portion 71 to the second position.

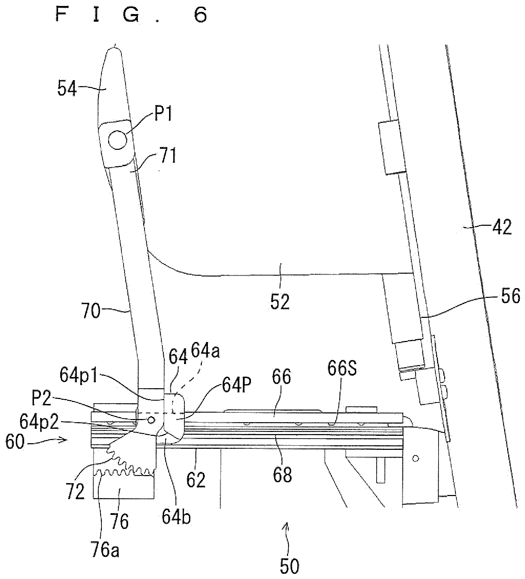

The first position is a position in which the arm 70 is extended along the horizontally shielding windup device 56 (see FIG. 5 and FIG. 6). Accordingly, in the state in which the horizontally shielding window shade 52 is housed, the arm 70 is disposed along the horizontally shielding windup device 56, which does not look conspicuous. Then, the horizontally shielding movable member 64 is moved from this state, whereby the horizontally shielding window shade 52 can be drawn.

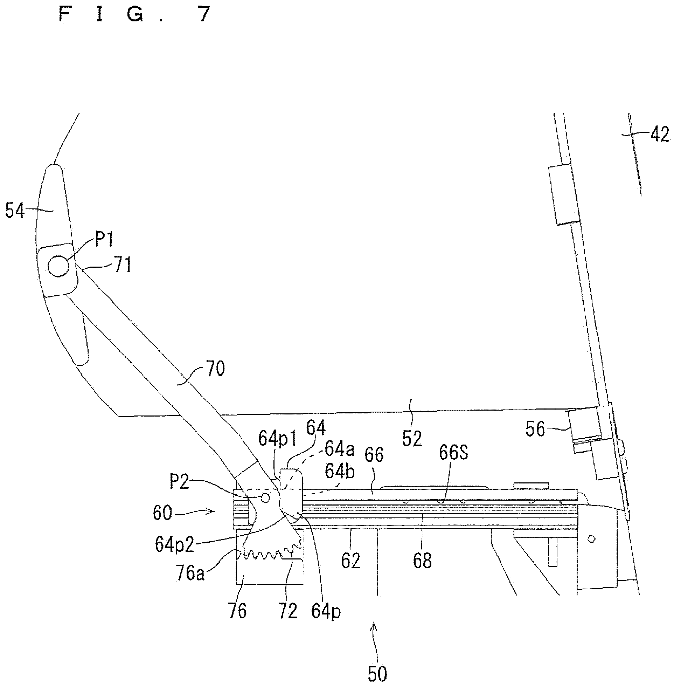

Meanwhile, the second position is a position in which the shade connecting portion 71 is inclined toward the drawing direction side of the horizontally shielding window shade 52, relative to the first position (see FIG. 7). In the moving direction of the horizontally shielding movable member 64, the shade connecting portion 71 is positioned on the side closer to the drawing direction with respect to the horizontally shielding movable member 64 in the second position than the second position. Accordingly, the horizontally shielding window shade 52 can be drawn by a larger amount by moving the shade connecting portion 71 by a distance equal to or larger than the moving distance of the horizontally shielding movable member 64. Note that the arm 70 is regulated toward the first position by the biasing force acting on the windup shaft of the windup device 56 (particularly, while the arm 70 is moving).

Needless to say, the arm 70 is only required to be regulated toward the first position and is not necessarily required to be regulated toward the second position. Further, the configuration for regulation on the first regulation side is not limited to the above-mentioned example, and it suffices that a position change can be regulated by, for example, abutment against other various spots of the arm 70.

A first gear 72 is provided on the side opposite to the shade connecting portion 71 in the arm 70, with the pin P2 that is a support portion for the horizontally shielding movable member 64 being sandwiched therebetween, and a second gear 76 is provided on the drawing-direction end side of the guide rail 66. The configuration is made such that the first gear 72 and the second gear 76 mesh with each other to change the position of the arm 70 from the first position to the second position in the path in which the horizontally shielding movable member 64 is directed toward the drawing-direction edge of the horizontally shielding window shade 52 along the guide rail 66.

More specifically, the first gear 72 is provided at the end of the arm 70 on the side opposite to the shade connecting portion 71 and is formed into an arc gear located approximately around the pin P2.

The second gear 76 is provided on the end side of the guide rail 66 in the direction in which the window shade 52 is drawn, and includes rack teeth 76a extending along the guide rail 66. The rack teeth 76a are directed toward the guide rail 66, and are provided in the area on the drawing direction side of the guide rail 66 except for the area on the housing direction side thereof. In the middle of the process where the horizontally shielding movable member 64 is moving toward the drawing direction side, the first gear 72 and the second gear 76 start to mesh with each other (see FIG. 6), and the meshing state is kept until the horizontally shielding movable member 64 reaches the terminal end in the drawing direction (see FIG. 7). While the second gear 76 is secured to the end of the guide rail 66 by means of a bracket or the like, the location at which the second gear 76 is mounted is not limited to the guide rail 66 per se and may be other parts such as a car body.

Needless to say, the first gear 72 is not strictly required to be an arc gear located approximately around the pin P2, and the second gear 76 is not strictly required to be parallel to the guide rail 66. For example, a second gear may be inclined with respect to the guide rail 66, and a first gear may be an arc gear whose distance from the pin P2 is changed in accordance with an inclination of the second gear.

The action of the arm 70 is described. In the initial state in which the horizontally shielding window shade 52 is housed, the arm 70 is in the first position, and the first gear 72 and the second gear 76 do not mesh with each other (see FIG. 5).

Until the middle of the process where the horizontally shielding movable member 64 is being directed toward the drawing direction side of the horizontally shielding window shade 52 from the above-mentioned state along the guide rail 66, the horizontally shielding window shade 52 is drawn with the arm 70 being regulated in the first position (state from FIG. 5 to FIG. 6). Then, in the middle of the process where the horizontally shielding movable member 64 is being directed toward the drawing direction side, the first gear 72 and the second gear 76 mesh with each other (see FIG. 6). As the horizontally shielding movable member 64 is directed along the drawing direction further, the second gear 76 moves toward the housing direction side relative to the horizontally shielding movable member 64 upon meshing of the first gear 72 with the second gear 76, and the position of the arm 70 is changed from the first position to the second position. Accordingly, the shade connecting portion 71 moves toward the drawing direction side relative to the horizontally shielding movable member 64. Therefore, the horizontally shielding window shade 52 can be drawn by an amount larger than the moving distance of the horizontally shielding movable member 64. In this state, the first gear 72 and the second gear 76 are kept in the state of meshing with each other, and swinging of the arm 70 is suppressed.

Meanwhile, until the middle of the process where the horizontally shielding movable member 64 is being directed toward the housing direction side of the horizontally shielding window shade 52 along the guide rail 66, the first gear 72 and the second gear 76 mesh with each other. Therefore, the position of the arm 70 is changed from the second position to the first position. Then, the horizontally shielding movable member 64 is moved toward the housing direction side further, and accordingly, the arm 70 returns to the initial state.

### <Common drive mechanism>

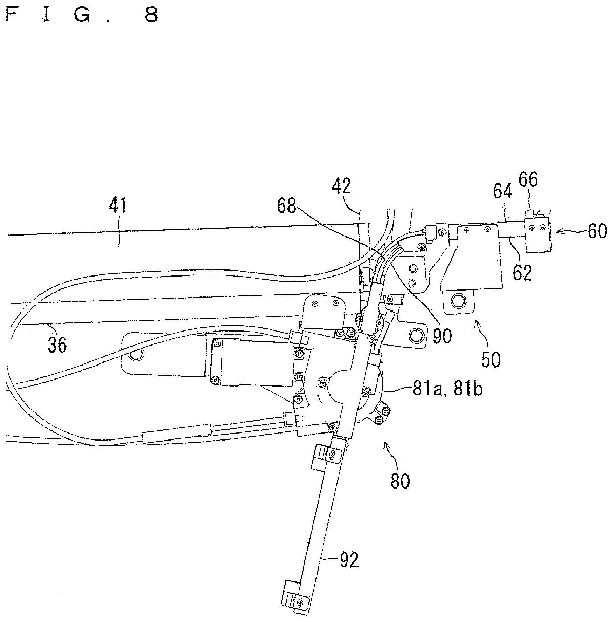

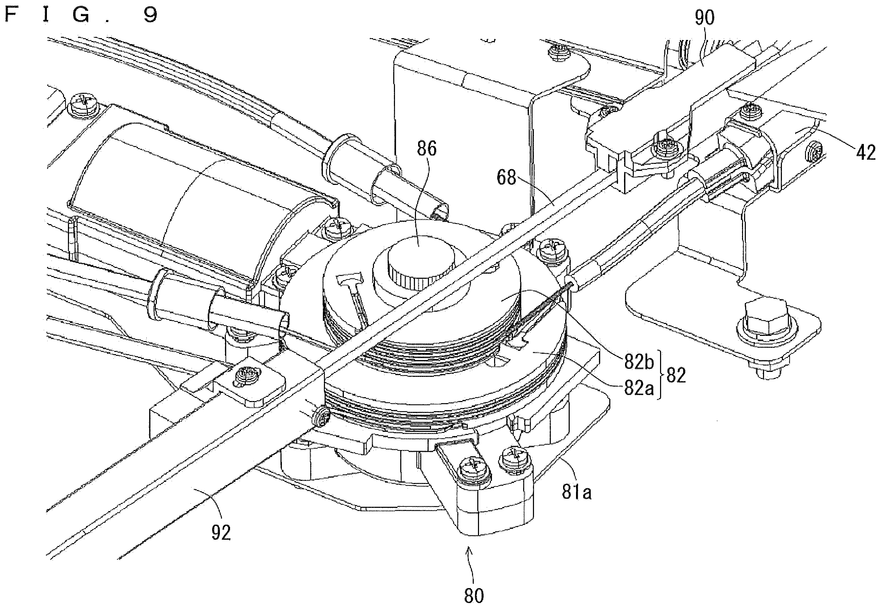

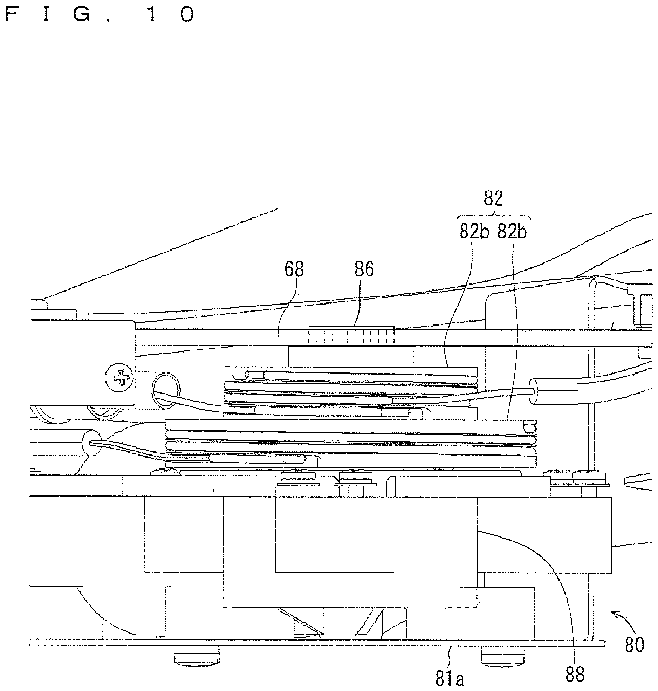

FIG. 8 is a side view of a main portion showing the common drive mechanism 80, FIG. 9 is a perspective view of the main portion showing the common drive mechanism 80, and FIG. 10 is a view illustrating the internal structure of the common drive mechanism 80.

As shown in FIG. 1, FIG. 2 and FIG. 8 to FIG. 10, the common drive mechanism 80 is configured so as to drive the vertically shielding window shade mechanism 30 and the horizontally shielding window shade mechanism 50 for drawing and housing. In this case, the common drive mechanism 80 drives the vertically shielding window shade mechanism 30 for drawing and housing by pulling the driving wire 46, and drives the horizontally shielding window shade mechanism 50 for drawing and housing by causing the linear rack tooth member 68 to move in a reciprocal manner.

That is, the common drive mechanism 80 includes a pulley body 82, a gear body 86 and a rotary drive member 88, and is mounted and secured to the portion between the vertically shielding window shade mechanism 30 and the horizontally shielding window shade mechanism 50, more specifically, to the horizontal frame 41 by means of a mounting member 81 formed of a metal plate, a resin part or the like. Needless to say, the common drive mechanism 80 is not required to be secured to the horizontal frame 41 or the like and may be mounted and secured to the guide rail 66, a car body or the like. The pulley body 82 and the gear body 86 are covered with a cover 81b formed of a resin or the like in the state of being installed in the mounting member 81a. FIG. 9 shows the state in which the cover 81b is omitted.

The rotary drive member 88 is a rotary drive source such as a DC motor capable of controlling rotary driving in both forward and reverse directions, and is configured by being screwed onto the mounting member 81a.

The pulley body 82 includes a large-diameter pulley body 82a and a small-diameter pulley body 82b, which are adjacent to each other and are integrated with each other on the drive shaft rotatively driven by the rotary drive member 88. Upon driving of the rotary drive member 88, the large-diameter pulley body 82a and the small-diameter pulley body 82b are synchronized with each other and can be rotatively driven in both forward and reverse directions. The drive shaft may be identical to the drive shaft of the rotary drive member 88 itself or may be configured to be connected to the drive shaft of the rotary drive member 88 itself by means of another change gear, pulley or the like.

The driving wire 46 drawn from one of the pair of vertically shielding guide rails 42, which has a larger moving distance of the vertically shielding movable member 44 (that is, one on the vehicle front side), is wound around the large-diameter pulley body 82a. The driving wire 46 drawn from the other of the pair of vertically shielding guide rails 42, which has a smaller moving distance of the vertically shielding movable member 44 (that is, the other on the vehicle back side), is wound around the small-diameter pulley body 82b. Upon rotary drive of the pulley body 82, any one of the both end sides of each driving wire 46 is pulled selectively, while the other thereof is drawn out. Accordingly, the vertically shielding movable member 44 of the vertically shielding window shade mechanism 30 moves up and down, so that the vertically shielding window shade 32 is driven to be drawn and wound. In this case, a diameter ratio between the large-diameter pulley body 82a and the small-diameter pulley body 82b is set to a value corresponding to a moving distance ratio between the two vertically shielding guide rails 42. Through the above, the large-diameter pulley body 82a and the small-diameter pulley body 82b are rotated integrally, and then the two vertically shielding movable members 44 are allowed to respectively move between ends (between an upper end and a lower end) of the predetermined movement path, so that the vertically shielding window shade 32 can be shielded and opened almost completely.

The gear body 86 is formed into a circular gear that can mesh with the linear rack tooth member 68. The gear body 86 is integrated with the pulley body 82 and is also connected to the drive shaft rotatively driven by the rotary drive member 88. The gear body 86, the large-diameter pulley body 82a and the small-diameter pulley body 82b may be formed of a resin or the like to be integrated with each other from the start or may be appropriately formed in a separate manner and be integrated with each other. The gear body 86 is configured so as to be integrated with the pulley body 82 and be synchronized with each other, to thereby being rotatively driven.

The linear rack tooth member 68 is extended through a proximal-end-side opening of the guide rail 66 and is guided toward the common drive mechanism 80. The common drive mechanism 80 includes a first rack tooth guide portion 90 and a second rack tooth guide portion 92 that guide the linear rack tooth member 68. The first rack tooth guide portion 90 has a square tubular shape capable of guiding the linear rack tooth member 68 and is formed into a shape in which a middle thereof is bent, whose one end side is opposed to the proximal-end-side opening of the guide rail 66 and other end side is directed toward the gear body 86. The second rack tooth guide portion 92 has a linear square tubular shape, whose one end side is opposed to the other-end-side opening of the first rack tooth guide portion 90 with the gear body 86 being sandwiched therebetween. The linear rack tooth member 68 passes through the first rack tooth guide portion 90 and is guided toward the second rack tooth guide portion 92 while being pressed against a peripheral surface of the gear body 86. This allows the linear rack tooth member 68 to mesh with the gear body 86 between the first rack tooth guide portion 90 and the second rack tooth guide portion 92.

When the gear body 86 is rotated by driving of the rotary drive member 88, the linear rack tooth member 68 is driven to move in a reciprocal manner in both directions along the longitudinal direction thereof. When the linear rack tooth member 68 is moved toward the drawing direction side of the horizontally shielding window shade 52 along the guide rail 66, the horizontally shielding window shade 52 is drawn. On the other hand, when the linear rack tooth member 68 is moved toward the housing direction side, the horizontally shielding window shade 52 is housed.

The second rack tooth guide portion 92 may be provided with a switch such as a microswitch that is turned on by being pressed upon the linear rack tooth member 68 moving for a predetermined length or more. It suffices that the switch is set to be turned on in the state in which the horizontally shielding window shade 52 is completely wound up, to thereby stop the rotation of the rotary drive member 88 upon the switch being turned on.

In this case, the pulley body 82 and the gear body 86 are integrated with each other, which is not necessarily required. The pulley body 82 and the gear body 86 may be configured to be driven by a separate drive portion (such as a motor) or may be configured to be rotatively driven about different rotation shafts by, for example, appropriately interposing a rotation transmission mechanism therebetween even in a case where they are driven by the same drive portion.

The description is given of the example in which the vertically shielding window shade mechanism 30 and the horizontally shielding window shade mechanism 50 are driven by a single drive mechanism, which may be respectively driven by different drive mechanisms.

### <Overall action>

An overall action of the window shade device 20 is described.

First, in the initial state, the vertically shielding window shade 32 and the horizontally shielding window shade 52 are housed (see FIG. 2).

In this state, when the rotary drive member 88 is rotatively driven in a predetermined direction, one end side of the driving wire 46 is pulled by the rotation of the pulley body 82, and the vertically shielding movable member 44 moves upward. As a result, the stay 34 is pulled upward, and the vertically shielding window shade 32 is drawn.

In synchronization with this, the linear rack tooth member 68 is delivered to the guide and support mechanism 62 side by the rotation of the gear body 86. Then, the horizontally shielding movable member 64 starts moving toward the drawing direction side along the guide rail 66, and the horizontally shielding window shade 52 is drawn by means of the arm 70 in the first position. When the first gear 72 and the second gear 76 mesh with each other in the middle of the process (see FIG. 6), the horizontally shielding movable member 64 is further moved toward the drawing direction side while the arm 70 is being caused to change its position from the first position to the second position. In the state in which the horizontally shielding movable member 64 reaches the terminal end on the drawing direction side along the guide rail 66, the arm 70 changes its position to the second position, and the horizontally shielding window shade 52 is drawn most. In this state, the first gear 72 and the second gear 76 are maintained in the meshing state, and the arm 70 is maintained in the second position.

After that, the rotation of the rotary drive member 88 is stopped, and then the vertically shielding window shade 32 and the horizontally shielding window shade 52 are maintained in the drawn state.

If the rotary drive member 88 is rotated in the direction opposite to the above-mentioned direction, the vertically shielding window shade 32 and the horizontally shielding window shade 52 are housed by the action opposite to the above-mentioned action.

According to the window shade device for vehicles 20 configured as described above, from the middle of the process where the horizontally shielding movable member 64 is directed toward the drawing-direction edge of the horizontally shielding window shade 52 along the guide rail 66, the second gear 76 meshes with the first gear 72 to change the position of the arm 70 from the first position to the second position in the path in which the horizontally shielding movable member 64 reaches the drawing-direction edge. Therefore, the horizontally shielding window shade 52 can be drawn by an amount larger than the moving distance of the horizontally shielding movable member 64. Then, in the state in which the horizontally shielding movable member 64 is drawn, the first gear 72 and the second gear 76 are maintained in the meshing state, and thus the arm 70 can be maintained in a constant position and swinging thereof is maintained. Accordingly, the horizontally shielding window shade 52 can be stably maintained in the drawn state, which suppresses the horizontally shielding window shade 52 from opening slightly or rattling.

The first gear 72 is an arc gear and the second gear 76 is rack teeth extending along the guide rail 66 in the state in which the horizontally shielding movable member 64 is moved to the drawing-direction side edge, with the result that the first gear 72 and the second gear 76 can be maintained in the state of stably meshing with each other while the horizontally shielding movable member 64 is moving and after the horizontally shielding movable member 64 reaches the drawing-direction side edge.

The horizontally shielding movable member 64 is moved by the linear rack tooth member 68 disposed along the guide rail 66, whereby it is possible to make the configuration for moving the guide and support mechanism 62 and the horizontally shielding movable member 64 compact.

The horizontally shielding window shade 52 whose drawing/housing direction is approximately horizontal can be made compact through driving with the use of the linear rack tooth member 68. In particular, the peripheral portion of the rear quarter window 12 is largely limited in terms of space because it is positioned in the back of a vehicle, and accordingly, achieving compactness leads to many advantages. Further, the vertically shielding window shade 32 whose drawing/housing direction is approximately vertical can be driven by a relatively strong force using the driving wire 46. As described above, a suitable configuration can be installed in accordance with the drawing/housing manner of the shade 32 or 52. Moreover, the linear rack tooth member 68 and the driving wire 46 are driven in common by the common drive mechanism 80, which makes the overall configuration compact.

### {Variations}

While the embodiment above has described the configuration including the vertically shielding window shade mechanism 30 as well as the horizontally shielding window shade mechanism 50, an effect achieved by using the arm 70 can also be achieved even by the configuration in which only the horizontally shielding window shade mechanism 50 and a drive part thereof are installed.

Further, (non-claimed embodiment), it is not necessarily required to adopt the configuration including the arm 70 in the horizontally shielding window shade mechanism 50. Even in this case, it is possible to achieve the above-mentioned effect achieved by using a horizontally shielding open/close mechanism including a driving wire, a horizontally shielding open/close mechanism including a linear tooth member and a common drive mechanism.

While the present invention has been described above in detail, the foregoing description is in all aspects illustrative, and the present invention is not limited thereto. The present invention is defined by the claims.

### Description of Symbols

- 10: rear side window
- 12: rear quarter window
- 20: window shade device for vehicles
- 30: vertically shielding window shade mechanism
- 32: vertically shielding window shade
- 36: vertically shielding windup device
- 40: vertically shielding open/close mechanism
- 42: vertically shielding guide rail
- 44: vertically shielding movable member
- 46: driving wire
- 50: horizontally shielding window shade mechanism
- 52: horizontally shielding window shade
- 56: horizontally shielding windup device
- 60: horizontally shielding open/close mechanism
- 62: guide and support mechanism
- 64: horizontally shielding movable member
- 64p: regulating projection
- 66: guide rail
- 68: linear rack tooth member
- 70: arm
- 71: shade connecting portion
- 72: first gear
- 76: second gear
- 80: common drive mechanism
- 82: pulley body
- 82a: large-diameter pulley body
- 82b: small-diameter pulley body
- 86: gear body
- 88: rotary drive member

## Claims

1. A window shade device (20) for vehicles that covers a window (12) of a vehicle for allowing the window (12) to be shielded and opened, comprising:
a window shade (52) configured to shield said window (12);
a windup device (56) winding up said window shade (52) in a manner of being drawn therefrom and housed therein;
a guide and support mechanism (62) including a guide path along a drawing/housing direction of said window shade (52) and a movable member (64) supported so as to move along the guide path; and
an arm (70) including one end serving as a shade connecting portion (71) connected to a drawing-side edge of said window shade (52) and the other end rotatively supported by said movable member (64), said arm (70) being configured to change a position thereof between a first position in which said shade connecting portion (71) is located on the housing direction side of said window shade (52) and a second position in which said shade connecting portion (71) is located on the drawing direction side of said window shade (52),
wherein a first gear (72) is provided on a side opposite to said shade connecting portion (71) in said arm (70), with a support portion for said movable member (64) being sandwiched therebetween,
said window shade device (20) for vehicles further comprising a second gear (76) configured to change the position of said arm (70) from said first position to said second position by meshing with said first gear (72) in a path in which said movable member (64) reaches the drawing-direction edge of said window (12) along said guide path from the middle of the process where said movable member (64) is directed toward the drawing-direction edge of said window shade (52).

2. The window shade device (20) for vehicles according to claim 1, wherein:
said first gear (72) is an arc gear located approximately around the support portion for the movable member (64) in said arm (70); and
said second gear (76) is rack teeth provided on the drawing-direction edge side of said window shade (52) in said guide path and extending along said guide path.

3. The window shade device (20) for vehicles according to claim 1 or 2, further comprising:
a linear rack tooth member (68) connected to said movable member (64) and disposed so as to move along said guide path; and
a drive mechanism meshing with rack teeth of said linear rack tooth member (68) and driving said linear rack tooth member (68) to reciprocate along a longitudinal direction thereof.

4. The window shade device (20) for vehicles according to any one of claims 1 to 3, wherein:
said windup device (56) is configured to draw therefrom and house therein said window shade (52) along an approximately horizontal direction; and
said window shade device (20) for vehicles further comprises the linear rack tooth member (68) connected to said movable member (64) and disposed so as to move along said guide path,
the window shade device (20) for vehicles further comprising:
a vertically shielding window shade (32) configured to shield another window (10) provided next to said window (12);
a vertically shielding windup device (36) winding up said vertically shielding window shade (32) in a manner of being drawn therefrom and housed therein along an approximately vertical direction;
a vertically shielding open/close mechanism (40) drawing and housing said vertically shielding window shade (32) by selectively pulling both end sides of a driving wire (46) extending from a vertically shielding movable member (44) configured to move along a drawing/housing direction of said vertically shielding window shade (32); and
a common drive mechanism (80) including:
a pulley body (82) around which said driving wire (46) is wound so as to selectively pull the both end sides of said driving wire (46) for driving;
a gear body (86) configured to mesh with the rack teeth of said linear rack tooth member (68); and
a rotary drive member (88) rotatively driving said pulley body (82) and said gear body (86).

## Patentansprüche

1. Fensterblendenvorrichtung (20) für Fahrzeuge, die ein Fenster (12) eines Fahrzeugs bedeckt, um das Abschirmen und Öffnen des Fensters (12) zu ermöglichen, umfassend:
eine Fensterblende (52), die dazu eingerichtet ist, das Fenster (12) abzuschirmen;
eine Aufwickelvorrichtung (56), die die Fensterblende (52) aufwickelt, indem sie aus dieser gezogen und darin aufgenommen wird;
einen Führungs- und Stützmechanismus (62), der einen Führungsweg entlang einer Zug-/Aufnahmerichtung der Fensterblende (52) und ein bewegliches Element (64) beinhaltet, das so gestützt wird, dass es sich entlang des Führungswegs bewegt; und
einen Arm (70), der ein Ende, das als Blendenverbindungabschnitt (71) dient, der mit der Zugseitenkante der Fensterblende (52) verbunden ist, und das andere Ende beinhaltet, das vom beweglichen Element (64) drehgestützt wird, wobei der Arm (70) so konfiguriert ist, dass er eine Position davon zwischen einer ersten Position, in der sich der Blendenverbindungsabschnitt (71) auf der Aufnahmerichtungsseite der Fensterblende (52) befindet, und einer zweiten Position, in der sich der Blendeverbindungsabschnitt (71) auf der Zugrichtungsseite der Fensterblende (52) befindet, ändert,
wobei ein erstes Zahnrad (72) auf einer Seite gegenüber dem Blendenverbindungsabschnitt (71) im Arm (70) bereitgestellt ist, wobei ein Stützabschnitt für das bewegliche Element (64) dazwischen sandwichartig aufgenommen ist,
wobei die Fensterblendenvorrichtung (20) für Fahrzeuge ferner ein zweites Zahnrad (76) umfasst, das so konfiguriert ist, dass es die Position des Arms (70) aus der ersten Position in die zweite Position ändert, indem es in das erste Zahnrad (72) auf einem Weg eingreift, auf dem das bewegliche Element (64) die Zugrichtungskante des Fensters (12) erreicht, entlang des Führungswegs von der Mitte des Prozesses, wobei das bewegliche Element (64) hin zur Zugrichtungskante der Fensterblende (52) gerichtet ist.

2. Fensterblendenvorrichtung (20) für Fahrzeuge nach Anspruch 1, wobei:
das erste Zahnrad (72) ein Bogenzahnrad ist, das sich ungefähr um den Stützabschnitt für das bewegliche Element (64) im Arm (70) befindet; und
das zweite Zahnrad (76) Zahnstangenzähne sind, die auf der Zugrichtungskantenseite der Fensterblende (52) auf dem Führungsweg bereitgestellt sind und sich entlang des Führungswegs erstrecken.

3. Fensterblendenvorrichtung (20) für Fahrzeuge nach Anspruch 1 oder 2, ferner umfassend:
ein lineares Zahnstangenzahnelement (68), das mit dem beweglichen Element (64) verbunden und so ausgelegt ist, dass es sich entlang des Führungswegs bewegt; und
einen Antriebsmechanismus, der in Zahnstangenzähne des linearen Zahnstangenzahnelements (68) eingreift und das lineare Zahnstangenzahnelement (68) so antreibt, dass es sich entlang einer Längsrichtung davon hin- und herbewegt.

4. Fensterblendenvorrichtung (20) für Fahrzeuge nach einem der Ansprüche 1 bis 3, wobei:
die Aufwickelvorrichtung (56) so konfiguriert ist, dass die Fensterblende (52) entlang einer ungefähr horizontalen Richtung aus dieser gezogen und in dieser aufgenommen wird; und
die Fensterblendenvorrichtung (20) für Fahrzeuge ferner das lineare Zahnstangenzahnelement (68) umfasst, das mit dem beweglichen Element (64) verbunden und so ausgelegt ist, dass es sich entlang des Führungswegs bewegt,
die Fensterblendenvorrichtung (20) für Fahrzeuge ferner umfasst:
eine Vertikalabschirmungs-Fensterblende (32), die so konfiguriert ist, dass sie ein weiteres Fenster (10) abschirmt, das neben dem Fenster (12) bereitgestellt ist;
eine Vertikalabschirmungs-Aufwickelvorrichtung (36), die die Vertikalabschirmungs-Fensterblende (32) so aufwickelt, dass sie entlang einer ungefähr vertikalen Richtung aus dieser gezogen und in dieser aufgenommen wird;
einen Vertikalabschirmungs-Öffnen/Schließen-Mechanismus (40), der die Vertikalabschirmungs-Fensterblende (32) durch selektives Ziehen an beiden Endseiten eines Antriebsdrahts (46) zieht und aufnimmt, der sich von einem vertikal abschirmenden beweglichen Element (44) erstreckt, das so konfiguriert ist, dass es sich entlang einer Zug-/Aufnahmerichtung der Vertikalabschirmungs-Fensterblende (32) bewegt; und
einen gemeinsamen Antriebsmechanismus (80), der beinhaltet:
einen Riemenscheibenkörper (82), um den der Antriebsdraht (46) gewickelt wird, um selektiv an den beiden Endseiten des Antriebsdrahts (46) zum Antreiben zu ziehen;
einen Zahnradkörper (86), der so konfiguriert ist, dass er in die Zahnstangenzähne des linearen Zahnstangenzahnelements (68) eingreift; und
ein Drehantriebselement (88), das den Riemenscheibenkörper (82) und den Zahnradkörper (86) drehantreibt.

## Revendications

1. Dispositif de store de fenêtre (20) pour véhicules qui recouvre une fenêtre (12) d'un véhicule pour permettre de protéger et d'ouvrir la fenêtre (12), comprenant :
un store de fenêtre (52) configuré pour protéger ladite fenêtre (12) ;
un dispositif d'enroulement (56) enroulant ledit store de fenêtre (52) afin d'être tiré à partir de ce dernier et logé à l'intérieur de ce dernier ;
un mécanisme de guidage et de support (62) comprenant une trajectoire de guidage le long d'une direction d'extraction/logement dudit store de fenêtre (52) et un élément mobile (64) supporté afin de se déplacer le long de la trajectoire de guidage ; et
un bras (70) comprenant une extrémité servant de partie de raccordement de store (71) raccordée à un bord du côté de l'extraction dudit store de fenêtre (52) et l'autre extrémité supportée, en rotation, par ledit élément mobile (64), ledit bras (70) étant configuré pour modifier sa position entre une première position dans laquelle ladite partie de raccordement de store (71) est positionnée du côté de la direction de logement dudit store de fenêtre (52) et une seconde position dans laquelle ladite partie de raccordement de store (71) est positionnée du côté de la direction d'extraction dudit store de fenêtre (52),
dans lequel un premier engrenage (72) est prévu sur un côté opposé à ladite partie de raccordement de store (71) dans ledit bras (70), avec une partie de support pour ledit élément mobile (64) qui est pris en sandwich entre eux,
ledit dispositif de store de fenêtre (20) pour véhicules comprenant en outre un second engrenage (76) configuré pour modifier la position dudit bras (70) de ladite première position à ladite seconde position par engrènement avec ledit premier engrenage (72) dans une trajectoire dans laquelle ledit élément mobile (64) atteint le bord de direction d'extraction de ladite fenêtre (12) le long de ladite trajectoire de guidage depuis le milieu du processus où ledit élément mobile (64) est dirigé vers le bord dans la direction d'extraction dudit store de fenêtre (52).

2. Dispositif de store de fenêtre (20) pour véhicules selon la revendication 1, dans lequel :
ledit premier engrenage (72) est un engrenage en forme d'arc positionné approximativement autour de la partie de support pour l'élément mobile (64) dans ledit bras (70) ; et
ledit second engrenage (76) est des dents de crémaillère prévues du côté du bord dans la direction d'extraction dudit store de fenêtre (52) dans ladite trajectoire de guidage et s'étendant le long de ladite trajectoire de guidage.

3. Dispositif de store de fenêtre (20) pour véhicules selon la revendication 1 ou 2, comprenant en outre :
un élément de dent de crémaillère linéaire (68) raccordé audit élément mobile (64) et disposé afin de se déplacer le long de ladite trajectoire de guidage ; et
un mécanisme d'entraînement s'engrenant avec des dents de crémaillère dudit élément de dent de crémaillère linéaire (68) et entraînant ledit élément de dent de crémaillère linéaire (68) pour effectuer un mouvement de va-et-vient le long de sa direction longitudinale.

4. Dispositif de store de fenêtre (20) pour véhicules selon l'une quelconque des revendications 1 à 3, dans lequel :
ledit dispositif d'enroulement (56) est configuré pour tirer à partir de ce dernier et loger à l'intérieur de ce dernier, ledit store de fenêtre (52) le long d'une direction approximativement horizontale ; et
ledit dispositif de store de fenêtre (20) pour véhicules comprend en outre l'élément de dent de crémaillère linéaire (68) raccordé audit élément mobile (64) et disposé afin de se déplacer le long de ladite trajectoire de guidage,
le dispositif de store de fenêtre (20) pour véhicules comprenant en outre :
un store de fenêtre (32) de protection verticale configuré pour protéger une autre fenêtre (10) prévue à côté de ladite fenêtre (12) ;
un dispositif d'enroulement (36) de protection verticale enroulant ledit store de fenêtre (32) de protection verticale afin d'être tiré de ce dernier et logé à l'intérieur de ce dernier le long d'une direction approximativement verticale ;
un mécanisme d'ouverture/fermeture de protection verticale (40) tirant et logeant ledit store de fenêtre (32) de protection verticale en tirant sélectivement les deux côtés d'extrémité d'un fil d'entraînement (46) s'étendant à partir d'un élément mobile (44) de protection verticale configuré pour se déplacer le long d'une direction d'extraction/logement dudit store de fenêtre (32) de protection verticale ; et
un mécanisme d'entraînement commun (80) comprenant :
un corps de poulie (82) autour duquel ledit fil d'entraînement (46) est enroulé afin de tirer sélectivement les deux côtés d'extrémité dudit fil d'entraînement (46) pour l'entraînement ;
un corps d'engrenage (86) configuré pour s'engrener avec les dents de crémaillère dudit élément de dent de crémaillère linéaire (68) ; et
un élément d'entraînement rotatif (88) entraînant en rotation ledit corps de poulie (82) et ledit corps d'engrenage (86).
